# EUROPÄISCHE PATENTSCHRIFT

(11) **EP 1 966 502 B1**
(45) Veröffentlichungstag und Bekanntmachung des Hinweises auf die Patenterteilung: **23.02.2011**
(21) Anmeldenummer: 06829508.8
(22) Anmeldetag: 12.12.2006
(51) Int. Cl.: F16D 23/06

(54) **SYNCHRONISIEREINRICHTUNG UND SYNCHRONRING FÜR EINE SYNCHRONISIEREINRICHTUNG**
SYNCHRONIZING DEVICE AND SYNCHRONIZER RING FOR A SYNCHRONIZING DEVICE
DISPOSITIF DE SYNCHRONISATION ET BAGUE DE SYNCHRONISATION POUR DISPOSITIF DE SYNCHRONISATION

(30) Priorität: 17.12.2005 DE 102005060572
(43) Veröffentlichungstag der Anmeldung: 10.09.2008
(73) Patentinhaber: Volskswagen Aktiengesellschaft, 38436 Wolfsburg (DE); Sulzer Friction Systems (Germany) GmbH, 28719 Bremen (DE)
(72) Erfinder: ALBRECHT, Michael, 38524 Sassenburg (DE); STORMER, Boris, 31535 Neustadt am Rübenberge (DE); SPRECKELS, Marcus, 28359 Bremen (DE); GARRETT, David, L., Beavercreek, OH-45434 (US)
(86) Internationale Anmeldenummer: PCT/EP2006/011921
(87) Internationale Veröffentlichungsnummer: WO 2007/068432

(56) Entgegenhaltungen:
- EP-A- 0 743 466
- EP-A1- 0 756 098
- EP-A1- 0 816 704
- EP-A1- 0 821 175
- FR-A- 2 250 404
- US-A- 4 776 228

## Beschreibung

Die Erfindung betrifft eine Synchronisiereinrichtung gemäß dem Oberbegriff des Patentanspruches 1 und einen Synchronring gemäß dem Oberbegriff des Patentanspruches 10.

Bekanntermaßen wird bei derzeit eingesetzten Synchronisiereinrichtungen für Fahrzeuggetriebe ein mit einer Hauptwelle verbundener Synchronkörper verwendet, der eine axial verschiebbare Schaltmuffe trägt und dem zumindest einseitig ein Synchronring zugeordnet ist, der gegenüber dem Synchronkörper axial verschiebbar ist. In umfangsseitigen Ausnehmungen des Synchronkörpers sind Druckstücke bzw. Synchronriegel gelagert, die über eine Synchronfeder gegen eine Schaltmuffe gedrückt werden, die vom Synchronkörper getragen ist.

Die Synchronfeder kann auf unterschiedliche Weise realisiert sein: Vielfach ist die Synchronfeder eine Spiraldruckfeder, die einen Synchronriegel radial in die Schaltmuffe drückt. Alternativ kann die Synchronfeder als zumindest eine Ringfeder, etwa eine Drahtringfeder, ausgebildet sein, die innenumfangsseitig im Synchronkörper angeordnet ist und dabei die Synchronriegel in die Schaltmuffe drückt. Die Ringfeder ist dabei in Axialrichtung an einer Innenumfangswand des Synchronkörpers verschiebbar bzw. kann in der Axialrichtung.wandern.

Aus der FR-A-2 250 404 ist ein gattungsgemäßer Synchronring für eine Synchronisiereinrichtung bekannt. Der Synchronring weist einen Synchronringanschlag auf; der zwischen zugeordneten Verdrehanschlägen des Synchronkörpers angeordnet ist. Am Synchronringanschlag ist ein Axialanschlag ausgebildet, der ein axiales Wandern eines Federelementes im Synchronkörper begrenzt. Derartige Synchronringe sind auch aus der EP-A1-0 756 098, der US-A-4 776 228 und der EP-A1-0 816 704 bekannt.

Aus der DE 35 19 811 A1 ist ein Synchronring für eine Synchronisiereinrichtung bekannt, der aus einem Blechmaterial im Stanz- und Ziehverfahren hergestellt ist. Die Mitnehmer bzw. Synchronanschläge des Synchronrings sind jeweils als ein sich in Axialrichtung erstreckender, vom Synchronring abgewinkelter Lappen ausgebildet, der sich zwischen den zugeordneten Verdrehanschlägen des Synchronrings bzw. der Schaltmuffe bewegen kann.

Aufgabe der Erfindung ist es, eine Synchronisiereinrichtung und einen Synchronring bereitzustellen, der eine kostengünstige und zuverlässige Halterung der Synchronringfeder in dem Synchronkörper ermöglicht.

Die Aufgabe wird mit den Merkmalen des Patentanspruches 1 oder des Patentanspruches 10 gelöst. Vorteilhafte Weiterbildungen der Erfindung enthalten die weiteren Ansprüche. Erfindungsgemäß ist der als sich in Axialrichtung erstreckende, vom Synchronring abgewinkelte, vorzugsweise dünnwandige Lappen als ein Axialanschlag ausgebildet, der das axiale Wandern der Synchronfeder im Synchronkörper begrenzt. Dadurch kann bei geringem Materialeinsatz einerseits der Lappen des Synchronrings mit seinen Seitenkanten mit den Verdrehanschlägen in Anlage bringbar sein und andererseits der Lappen als Axialanschlag für die Synchronfeder, vorzugsweise Ringfeder, wirken. Die Erfindung kann dabei-sowohl für eine Einfach- als auch eine Mehrfachsynchronisierung verwendet werden. Das Fahrzeuggetriebe kann dabei als ein manuelles Getriebe, ein Doppelkupplungsgetriebe oder ein automatisiertes Schaltgetriebe ausgebildet sein.

Gemäß der Erfindung ist der als Lappen ausgebildete Synchronringanschlag bzw. Mitnehmer mit einem Formabschnitt in Form einer sicke ausgebildet, der die Synchronfeder in Axialrichtung begrenzt. Dadurch ist es möglich, lediglich den Formabschnitt des Lappens als großflächigen Axialanschlag auszubilden, während der Lappen selbst eine geringe Materialstärke aufweisen kann. Dabei kann es bereits ausreichen, wenn lediglich der Formabschnitt des Lappens der Synchronfeder axial gegenüberliegt, während der Lappen selbst in Radialrichtung außerhalb der Synchronfeder vorgesehen ist. Weiterhin unterstützt der Formabschnitt auch die gegen die Verdrehanschläge anschlagenden Seitenkanten des Lappens in ihrer Formstabilität, so dass der dünnwandige Lappen sowohl in Axialrichtung als auch in Radialrichtung stabiler ausgebildet ist.

Zur Ausbildung einer großflächigen Anschlagfläche für die Synchronfeder kann der Formabschnitt zumindest stirnseitig in dem Lappen ausgebildet sein, während dessen Seitenkanten - unabhängig vom Formabschnitt - in Anlage mit den Verdrehanschlägen des Synchronkörpers bzw. der Schaltmuffe bringbar sind.

Bevorzugt kann der Lappen und/oder sein Formabschnitt über einen freien Zwischenraum von einem Synchronkegel des Synchronrings beabstandet sein. Der Synchronkegel ist dabei an einem Innenumfang des Synchronrings ausgebildet. Da in diesem Fall der Lappen bzw. sein Formabschnitt außer Anlage mit dem Synchronkegel sind, kann der Formabschnitt unabhängig vom Synchronkegel in verschiedenen Formvarianten ausgebildet werden.

Erfindungsgemäß ist der Formabschnitt in einem fertigungstechnisch besonders einfach durchführbaren Prägeverfahren als eine in den Lappen geformte Sicke ausgebildet. Die Sicke kann sich bevorzugt im Wesentlichen parallel zwischen den Seitenkanten des Lappens mittig erstrecken. Dadurch ist einerseits die Formstabilität des Lappens erhöht und andererseits der Lappen mit seiner Sicke den Axialanschlag für die Synchronfeder bildet.

Von Vorteil kann es sein, wenn der Synchronring zumindest mit seinem Lappen und dem Formabschnitt im Wesentlichen dieselbe Materialstärke aufweist. So wird erfindungsgemäß ein großflächiger Axialanschlag des Lappens lediglich durch seinen Formabschnitt ausgebildet. Eine zusätzliche, aufwändige Stauchung des Lappens zur Steigerung einer Anschlagfläche für die Anlage mit der Synchronfeder ist somit nicht notwendig.

Der erfindungsgemäße Synchronring kann fertigungstechnisch besonders einfach sowie mit reduziertem Materialeinsatz aus einem Blechmaterial in einem Stanz- und/oder Ziehverfahren hergestellt werden.

Nachfolgend ist ein Aüsführurigsbeispiel der Erfindung anhand der beigefügten Figuren beschrieben.

Es zeigen:
- Fig. 1: in einer perspektivischen Teilansicht einen Ausschnitt aus einer Synchronisiereinrichtung für ein Fahrzeuggetriebe; und
- Fig. 2: in einer perspektivischen Ansicht den Synchronring für die Synchronisier- einrichtung.

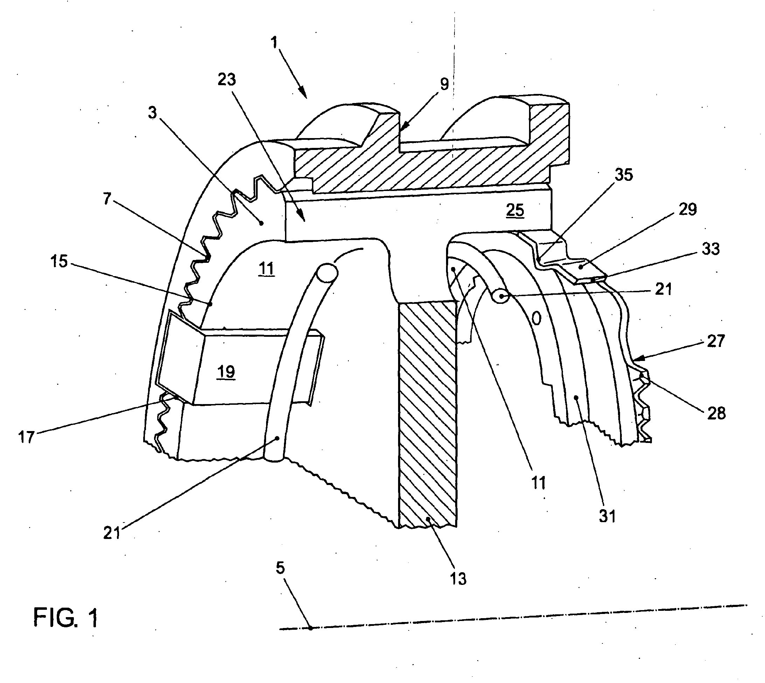

In der Fig. 1 ist eine Synchronisiereinrichtung 1 für ein nicht dargestelltes Fahrzeuggetriebe gezeigt. Ein Synchronkörper 3 der Synchronisiereinrichtung ist fest mit einer Hauptwelle verbunden, die in der Fig. 1 mit ihrer Achse 5 strichpunktiert angedeutet ist. Der Synchronkörper 3 ist an seinem Außenumfang mit einer Verzahnung 7 versehen und trägt über seiner Verzahnung 7 eine axial verschiebbare Schaltmuffe 9.

Gemäß der Fig. 1 ist der Synchronkörper 3 stimseitig mit zwei gegenüberliegenden Ringräumen 11 ausgebildet, die über eine Trennwand 13 in Axialrichtung voneinander beabstandet sind. In den Zylinderwänden 15 der Ringräume 11 sind in Axialrichtung durchgehende Ausnehmungen 17 ausgebildet, die den Zahnkranz 7 des Synchronkörpers 3 unterbrechen. Eine dieser Ausnehmungen 17 ist in der Fig. 1 gezeigt. In der gezeigten Ausnehmung 17 ist ein Synchronriegel 19 angeordnet, der sich in Axialrichtung im Wesentlichen über die gesamte Länge der Ausnehmung 17 erstreckt. Der in der Fig. 1 gezeigte Synchronriegel 19 wird über zwei, in jeweils einem der Ringräume 11 angeordnete Synchronfedem 21 gegen die Schaltmuffe 9 gedrückt. Die Synchronfedem 21 sind als Drahtringfedem ausgebildet.

Weiter sind gemäß der Fig. 1 sich in Axialrichtung erstreckende Nuten 23 im Außenumfang des Synchronkörpers 3 vorgesehen, von denen in der Fig.1 eine Nut 23 mit ihrer einen Seitenwand 25 gezeigt ist. Die Seitenwände der Nuten 23 bilden Verdrehanschläge 25, von denen in der Schnittdarstellung einer gezeigt ist. Zwischen den Verdrehanschlägen 25 des Synchronkörpers 3 ist ein Synchronring 27 mit seinem Synchronringanschlag 29 bzw. Mitnehmer in einem kleinen Drehwinkel verstellbar angeordnet. In der Fig. 1 ist lediglich auf der rechten Seite des Synchronkörpers 3 der Synchronring 27 dargestellt und ist aus Gründen der Übersichtlichkeit der linksseitig angeordnete Synchronring 27 weggelassen.

Bei einem Synchronisiervorgang wird in bekannter Weise bei einer Einfachsynchronisierung die Schaltmuffe 9 mittels eines nicht dargestellten Schaltgestänges in Richtung eines nicht gezeigten Gangrades axial verschoben. Dadurch werden die Synchronriegel 19 von der Schaltmuffe 9 mitgenommen. Die Synchronriegel 19 drücken dabei den Synchronring 27 mit seinem Synchroninnenkegel 31 auf einen Synchronkegel des Gangrads, so dass aufgrund des dabei entstehenden Reibmoments das Gangrad in Drehrichtung mitgenommen wird und der Synchronring 27 mit seinem Synchronringanschlag 29 bzw. Mitnehmer gegen einen der Verdrehanschläge 25 anschlägt und mit seinen Sperrzähnen 28 eine Axialbewegung der Schaltmuffe 9 sperrt.

Alternativ wird bei einer Doppel- oder Mehrfachsynchronisierung der Synchronring 27 nicht unmittelbar auf das Gangrad gedrückt, sondern auf zusätzliche Synchronisierbauteile, die mit dem Gangrad verbunden sind.

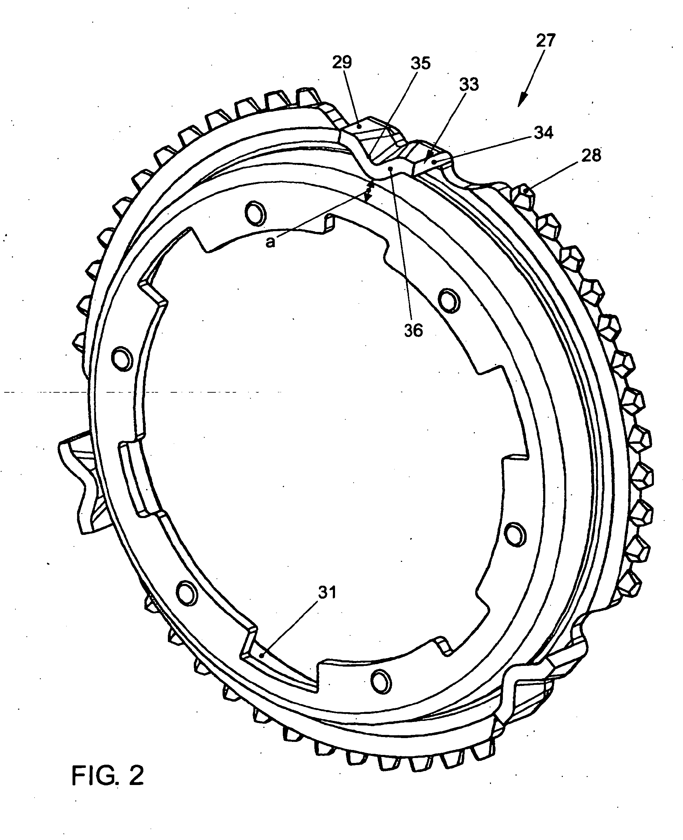

In der Fig. 2 ist der in der Synchronisiereinrichtung 1 verwendete Synchronring 27 gezeigt. Der Synchronring 27 ist aus einem Blechmaterial von im wesentlichen derselben Materialstärke in einem Zieh- und Stanzverfahren hergestellt. Dabei ist der Synchronringanschlag 29 als ein sich in Axialrichtung erstreckender, vom Synchronring 27 abgebogener Lappen ausgebildet. Wie in der Fig. 2 gezeigt ist, sind drei gleichwinklig voneinander beabstandete Lappen 29 geformt. Die Seitenkanten 33 des Lappens 29 bilden seitliche Anschlagflächen 34, die jeweils mit zugeordneten Verdrehanschlägen 25 des Synchronkörpers 3 in Anlage bringbar sind. An seiner Innenumfangsseite ist der Synchronring 27 mit seinem Synchroninnenkegel 31 ausgebildet.

Wie aus den Fig. 1 und 2 hervorgeht, weist der Lappen 29 eine zwischen seinen Seitenkanten 33 parallel verlaufende mittig angeordnete Sicke 35 auf, so dass der Lappen 29 stirnseitig eine durch die Sicke 35 vergrößerte, in etwa V-förmige Anschlagfläche 36 zur Begrenzung der Axialbewegung der Ringfeder 21 ausbildet. Die Sicke 35 des Lappens 29 ragt dabei gemäß der Fig. 1 radial in die Ringräume 11 des Synchronkörpers 3 hinein und liegt mit ihrer Spitze der Drahtringfeder 21 gegenüber. Gemäß der Fig. 2 trägt der Synchronring 27 an seinem Umfang als Außenverzahnung die Spenzähne 28, die durch die drei Lappen 29 unterbrochen ist. Jeder der Lappen 29 ist mit seiner jeweiligen Sicke 35 über einen freien Zwischenraum a von dem Synchroninnenkegel 31 beabstandet. Eine Formgebung des als Sicke 35 ausgebildeten Formabschnitts kann daher unabhängig von dem Synchroninnenkegel 31 erfolgen, solange der Lappen 29 jeweils mit den synchronkörperseitigen Verdrehanschlägen 25 in Anlage bringbar ist und als ein Axialanschlag für die Drahtringfeder 21 wirken kann.

### Bezugszeichenliste

- 1: Synchronisiereinrichtung
- 3: Synchronkörper
- 5: Achse der Hauptwelle
- 7.: Verzahnung des Synchronkörpers
- 9: Schaltmuffe
- 11: Ringräume
- 13: Trennwand
- 15: Zylinderwand
- 17: Ausnehmung
- 19: Synchronriegel
- 21: Drahtringfeder
- 23: Nut
- 25: Verdrehanschläge
- 27: Synchronring
- 28: Sperrzähne
- 29: Synchronringanschlag
- 31: Synchroninnenkegel
- 33: Seitenkanten
- 34: Anschlagfläche
- 35: Sicke
- 36: Anschlagfläche
- a: freier Zwischenraum

## Patentansprüche

1. Synchronisiereinrichtung für ein Fahrzeuggetriebe, mit zumindest einem Synchronring (27), der gegenüber einem Synchronkörper(3) axial verschiebbar ist, und mit zumindest einer synchronkörperseitig angeordneten Synchronfeder (21), wobei der Synchronring (27) mit einem Synchronringanschlag (29) zwischen zugeordneten Verdrehanschlägen (25) des Synchronkörpers (3) bzw, einer Schaltmuffe (9) verdrehbar ist, und der Synchronringanschlag (29) als ein sich in Axialrichtung erstreckender, vom Synchronring (27) abgewinkelter, vorzugsweise dünnwandiger Lappen ausgebildet ist, wobei der Lappen (29) als ein Axialanschlag ausgebildet ist, der ein axiales Wandern der Synchronfeder (21) im Synchronkörper (3) begrenzt, **dadurch gekennzeichnet, dass** der Synchronring (27) aus einem Blechmaterial hergestellt ist, in dem der Axialanschlag (35) als eine in dem Lappen (29) geformte Sicke ausgebildet ist.

2. Synchronisiereinrichtung nach Anspruch 1, **dadurch gekennzeichnet, dass** die Sicke (35) sich im wesentlichen parallel zwischen den Seitenkanten (33) des Lappens (29) und/oder mittig erstreckt.

3. Synchronisiereinrichtung nach einem der vorhergehenden Ansprüche, **dadurch gekennzeichnet, dass** der Lappen (29) und/oder seine sicke (35) der Synchronfeder (21) axial gegenüberliegt.

4. Synchronisiereinrichtung nach einem der vorhergehenden Ansprüche, **dadurch gekennzeichnet, dass** der Lappen (29) eine stirnseitige Anschlagfläche (36) zur Begrenzung des axialen Wanderns der Synchronfeder (21) und/oder Seitenanschlagflächen (34) aufweist, die mit den Verdrehanschlägen (25) in Anlage bringbar sind.

5. Synchronisiereinrichtung nach einem der vorhergehenden Ansprüche, **dadurch gekennzeichnet, dass** der Axialanschlag (35) zumindest stirnseitig in dem Lappen (29) ausgebildet ist.

6. Synchronisiereinrichtung nach einem der vorhergehenden Ansprüche, **dadurch gekennzeichnet, dass** der Lappen (29) zumindest mit seinem Axialanschlag (35) in einen synchronkörperseitigen Ringraum (11) ragt, in dem die Synchronfeder (21) in Form einer Ringfeder angeordnet ist.

7. Synchronisiereinrichtung nach einem der vorhergehenden Ansprüche, **dadurch gekennzeichnet, dass** der Axialanschlag (35) des Lappens (29) über einen freien Zwischenraum (a) von einem Synchronkegel (31) des Synchronrings (27) beabstandet ist.

8. Synchronisiereinrichtung nach einem der vorhergehenden Ansprüche, **dadurch gekennzeichnet, dass** der Synchronring (27) zusammen mit seinem Lappen (29) und/oder dem Axialanschlag (35) im Wesentlichen dieselbe Materialstärke aufweisen.

9. Synchronisiereinrichtung nach einem der vorhergehenden Ansprüche, **dadurch gekennzeichnet, dass** das Federelement (21) als eine sich ringförmig im Synchronkörper (3) erstreckende Feder, vorzugsweise eine Ringfeder ausgebildet ist.

10. Synchronring (27) für eine Synchronisiereinrichtung (1) eines Fahrzeuggetriebes nach den Ansprüchen 1 bis 9,
mit einem Synchronringanschlag (29), der als ein vom Synchronring in Axialrichtung abgewinkelter, vorzugsweise dünnwandiger Lappen ausgebildet ist, wobei der Lappen mit einem Axialanschlag ausgebildet ist, der im eingebautem Zustand des Synchronrings ein axiales Wandern einer Federelements (21) im Synchronkörper (3) begrenzt, **dadurch gekennzeichnet, dass** der Synchronring (27) aus einem Blechmaterial hergestellt ist, in dem der Axialanschlag (35) als eine in dem Lappen (29) geformte Sicke ausgebildet ist.

## Claims

1. Synchronizing device for a vehicle gearbox, having at least one synchronizer ring (27) which is axially movable relative to a synchronizer body (3) and having at least one synchronizer spring (21) which is arranged on the synchronizer body, with the synchronizer ring (27) being rotatable with a synchronizer ring stop (29) between associated rotational stops (25) of the synchronizer body (3) and of a shift sleeve (9), and with the synchronizer ring stop (29) being formed as a preferably thin-walled lug which extends in the axial direction and which is bent from the synchronizer ring (27), with the lug (29) being designed as an axial stop which limits an axial travel of the synchronizer spring (21) in the synchronizer body (3), **characterized in that** the synchronizer ring (27) is produced from a sheet-metal material in which the axial stop (35) is formed as a bead formed in the lug (29).

2. Synchronizing device according to Claim 1, **characterized in that** the bead (35) extends substantially parallel between the side edges (33) of the lug (29) and/or centrally.

3. Synchronizing device according to either of the preceding claims, **characterized in that** the lug (29) and/or its bead (35) is situated axially opposite the synchronizer spring (21).

4. Synchronizing device according to one of the preceding claims, **characterized in that** the lug (29) has an end-side stop surface (36) for limiting the axial travel of the synchronizer spring (21) and/or side,stop surfaces (34) which can be placed in contact with the rotational stops (25).

5. Synchronizing device according to one of the preceding claims, **characterized in that** the axial stop (35) is formed at least at the end side in the lug (29).

6. Synchronizing device according to one of the preceding claims, **characterized in that** the lug (29) projects at least with its axial stop (35) into an annular chamber (11) in the synchronizer body, in which annular chamber the synchronizer spring (21) is arranged in the form of an annular spring.

7. Synchronizing device according to one of the preceding claims, **characterized in that** the axial stop (35) of the lug (29) is spaced apart from a synchronizer cone (31) of the synchronizer ring (27) by a free intermediate space (a).

8. Synchronizing device according to one of the preceding claims, **characterized in that** the synchronizer ring (27) together with its lug (29) and/or the axial stop (35) have substantially the same material thickness.

9. Synchronizing device according to one of the preceding claims, **characterized in that** the spring element (21) is formed as a spring which extends annularly in the synchronizer body (3), preferably an annular spring.

10. Synchronizer ring (27) for a synchronizing device (1) of a vehicle gearbox according to Claims 1 to 9, having a synchronizer ring stop (29) which is formed as a preferably thin-walled lug which is bent from the synchronizer ring in the axial direction, with the lug being formed with an axial stop which, in the installed state of the synchronizer ring, limits an axial travel of a spring element (21) in the synchronizer body (3), **characterized in that** the synchronizer ring (27) is produced from a sheet-metal material in which the axial stop (35) is formed as a bead formed in the lug (29).

## Revendications

1. Dispositif de synchronisation pour une transmission de véhicule, comprenant au moins une bague de synchronisation (27) qui peut être déplacée axialement par rapport à un corps de synchronisation (3), et au moins un ressort de synchronisation (21) disposé du côté du corps de synchronisation, la bague de synchronisation (27) pouvant tourner avec une butée de bague de synchronisation (29) entre des butées de rotation associées (25) du corps de synchronisation (3) ou d'un manchon coulissant (9), et la butée de bague de synchronisation (29) étant réalisée sous forme de languette de préférence à paroi mince, s'étendant dans la direction axiale et coudée par rapport à la bague de synchronisation (27), la languette (29) étant réalisée sous forme d'une butée axiale, qui limite une migration axiale du ressort de synchronisation (21) dans le corps de synchronisation (3), **caractérisé en ce que** la bague de synchronisation (27) est fabriquée en un matériau en tôle dans lequel la butée axiale (35) est réalisée sous forme de moulure façonnée dans la languette (29).

2. Dispositif de synchronisation selon la revendication 1, **caractérisé en ce que** la moulure (35) s'étend essentiellement parallèlement entre les arêtes latérales (33) de la languette (29) et/ou s'étend centralement.

3. Dispositif de synchronisation selon l'une quelconque des revendications précédentes, **caractérisé en ce que** la languette (29) et/ou sa moulure (35) est/sont disposée(s) axialement en regard du ressort de synchronisation (21).

4. Dispositif de synchronisation selon l'une quelconque des revendications précédentes, **caractérise en ce que** la languette (29) présente une surface de butée frontale (36) pour limiter la migration axiale du ressort de synchronisation (21) et/ou des surfaces de butée latérales (34) qui peuvent être amenées en appui contre les butées de rotation (25).

5. Dispositif de synchronisation selon l'une quelconque des revendications précédentes, **caractérisé en ce que** la butée axiale (35) est réalisée au moins du côté frontal dans la languette (29).

6. Dispositif de synchronisation selon l'une quelconque des revendications précédentes, **caractérisé en ce que** la languette (29) pénètre au moins avec sa butée axiale (35) dans un espace annulaire (11) du côté du corps de synchronisation, dans lequel est disposé le ressort de synchronisation (21) en forme de ressort annulaire.

7. Dispositif de synchronisation selon l'une quelconque des revendications précédentes, **caractérisé en ce que** la butée axiale (35) de la languette (29) est espacée par le biais d'un espace intermédiaire libre (a) d'un cône de synchronisation (31) de la bague de synchronisation (27).

8. Dispositif de synchronisation selon l'une quelconque des revendications précédentes, **caractérisé en ce que** la bague de synchronisation (27) conjointement avec sa languette (29) et/ou la butée axiale (35) présentent essentiellement la même épaisseur de matériau.

9. Dispositif de synchronisation selon l'une quelconque des revendications précédentes, **caractérisé en ce que** l'élément de ressort (21) est réalisé sous la forme d'un ressort s'étendant sous forme annulaire' dans le corps de synchronisation (3), de préférence est réalisé en forme de ressort annulaire.

10. Bague de synchronisation (27) pour un dispositif de synchronisation (1) d'une transmission de véhicule selon les revendications 1 à 9, comprenant une butée de bague de synchronisation (29) qui est réalisée sous forme de languette de préférence à paroi mince, coudée par rapport à la bague de synchronisation dans la direction axiale, la languette étant réalisée avec une butée axiale qui limite dans l'état monté de la bague de synchronisation une migration axiale d'un élément de ressort (21) dans le corps de synchronisation (3), **caractérisée en ce que** la bague de synchronisation (27) est fabriquée en un matériau en tôle dans lequel la butée axiale (35) est réalisée sous forme de moulure façonnée dans la languette (29).
